# EUROPÄISCHE PATENTSCHRIFT

(11) **EP 2 470 393 B1**
(45) Veröffentlichungstag und Bekanntmachung des Hinweises auf die Patenterteilung: **11.12.2019**
(21) Anmeldenummer: 10737806.9
(22) Anmeldetag: 05.07.2010
(51) Int. Cl.: B60L 58/18, B60L 58/19, B60L 58/21

(54) **PARALLELSCHALTUNG VON AKKUMULATORSTRÄNGEN**
PARALLEL CIRCUIT OF ACCUMULATOR LINES
CIRCUIT EN PARALLÈLE DE BRANCHES D'ACCUMULATEUR

(30) Priorität: 28.08.2009 DE 102009028972
(43) Veröffentlichungstag der Anmeldung: 04.07.2012
(73) Patentinhaber: Robert Bosch GmbH, 70442 Stuttgart (DE)
(72) Erfinder: BUTZMANN, Stefan, 71717 Beilstein (DE)
(86) Internationale Anmeldenummer: PCT/EP2010/059526
(87) Internationale Veröffentlichungsnummer: WO 2011/023436

(56) Entgegenhaltungen:
- WO-A1-2009/096073
- US-A1- 2004 026 140
- US-A1- 2004 135 544

## Beschreibung

### Stand der Technik

Die Erfindung betrifft eine Schaltung zum Verbinden eines ersten Akkumulatorstranges mit einem zweiten Akkumulatorstrang aus einem Akkumulator, einen Akkumulator zur Aufnahme und Abgabe elektrischer Energie über einen Zwischenkreiskondensator und ein Fahrzeugbordnetz zur Versorgung von elektrischen Verbrauchern in einem Kraftfahrzeug mit elektrischer Energie aus einem Akkumulator.

Es zeichnet sich ab, dass in Zukunft sowohl bei stationären Anwendungen wie zum Beispiel Windkraftanlagen als auch in Fahrzeugen wie zum Beispiel Hybrid- oder Elektrofahrzeugen vermehrt neue Akkumulatorsysteme zum Einsatz kommen werden, an die sehr hohe Anforderungen bezüglich ihrer Zuverlässigkeit gestellt werden. Hintergrund dieser hohen Anforderungen ist, dass ein Ausfall des Akkumulators zu einem Ausfall des Gesamtsystems führen kann. Beispielsweise führt bei einem Elektrofahrzeug ein Ausfall der Traktionsbatterie zu einem sogenannten "Liegenbleiber". Dies kann sogar zu sicherheitsrelevanten Problemen führen. Beispielsweise werden bei Windkraftanlagen Akkumulatoren eingesetzt, um bei starkem Wind die Anlage durch eine Rotorblattverstellung vor unzulässigen Betriebszuständen zu schützen.

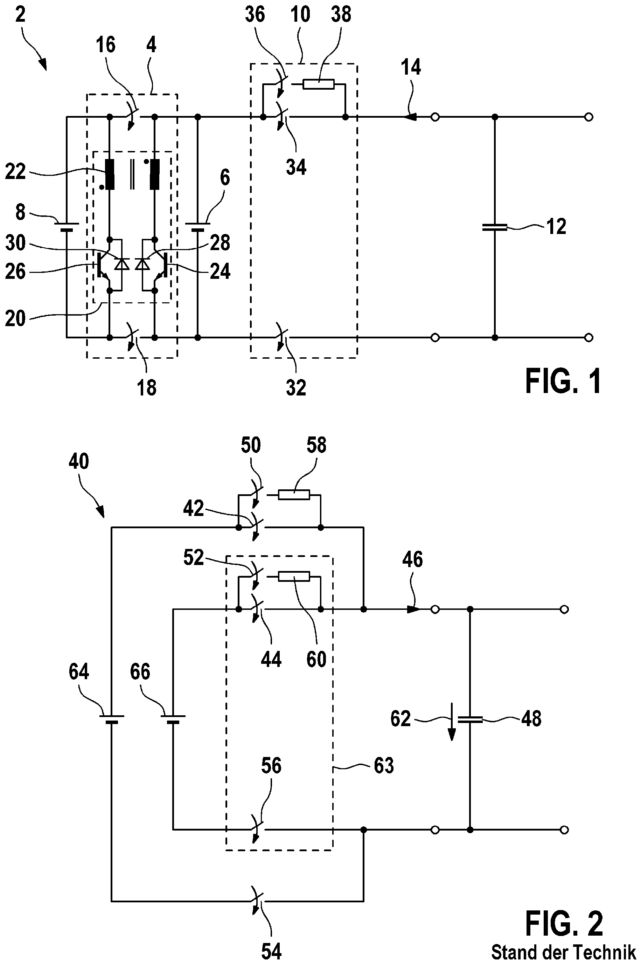

Zur Bereitstellung hoher Energien und Leistungen werden auch mehrere Akkumlatorstränge 64, 66 miteinander parallel verschaltet. Das Prinzipschaltbild eines solchen Akkumulators 40 ist in Figur 2 gezeigt.

Um den Akkumulator 40 von einem elektrischen Verbraucher, wie beispielsweise einem Fahrzeugbordnetz, trennen zu können, sind typischerweise zwei Leistungsschalter wie Schütze 42, 44 vorgesehen. Beim Einschalten der beiden Schütze 42, 44 würde jedoch ein erheblicher Strom 46 in den Zwischenkreiskondensator 48 fließen, so dass zunächst ein sogenanntes Vorladeschütz 50, 52 und das am anderen Akkumulatorpol angebrachte

Hauptschütz 54, 56 eingeschaltet wird. Das Vorladeschütz 50, 53 weist meist einen Schutzwiderstand 58, 60 auf. Hierdurch wird der Zwischenkreiskondensator 48 zunächst mit einem begrenzten Strom 46 aufgeladen. Sobald die Spannung 62 am Zwischenkreiskondensator 48 hinreichend groß ist, wird das Hauptschütz 42, 44 eingeschaltet. Herkömmlich wird eine solche Schaltung 63 für beide Akkumulatorstränge 64, 66 unabhängig voneinander verwendet.

Die Kosten für die Leistungsschalter in den Hauptschützen 42, 44, 54, 56 sind jedoch sehr hoch. Desweiteren zeigt sich, dass bei gleichzeitigem Einschalten beider Vorladeschütze 50, 52 beziehungsweise eines Hauptschützes 54, 56 und des zum anderen Akkumulatorstrang gehörigen Vorladeschützes 50, 52 ein Ausgleichsstrom über die Vorladeschütze 50, 52 und die dazugehörigen Widerstände 58, 60 zwischen den beiden Akkumulatorsträngen 64, 66 fließt, der an den Vorladewiderständen 58, 60 in Verlustwärme umgesetzt wird.

Die WO2009/096073 zeigt einen DC/DC-Wandler mit einer Spule, einem Kondensator und Schaltern, die zwischen zwei Sekundärbatterien angeordnet sind.

### Offenbarung der Erfindung

Aufgabe der vorliegenden Erfindung ist es daher, eine Schaltung zum Verbinden von wenigstens zwei Akkumulatorsträngen in einem Akkumulator anzugeben, mit der Kosten reduziert und elektrische Verluste im Akkumulator verringert werden können.

Die Erfindung gibt daher eine Schaltung zum parallelen Verbinden eines ersten Akkumulatorstranges mit einem zweiten Akkumulatorstrang aus einem Akkumulator an. Der Akkumulator ist zur Aufnahme und Abgabe von elektrischer Energie über die Akkumulatorstränge vorgesehen. Jeder Akkumulatorstrang weist einen Pluspol und einen Minuspol zur Aufnahme und Abgabe der elektrischen Energie auf. Erfindungsgemäß weist die Schaltung wenigstens einen ersten Schalter auf, der zum Trennen und Verbinden zweier gleichartiger Pole der beiden Akkumulatorstränge vorgesehen ist. Durch die erfindungsgemäße Schaltung werden die einzelnen Akkumulatorstränge miteinander parallel verschaltet und können als Ganzes über eine einzige herkömmliche Schutzeinrichtung mit einem Zwischenkreiskondensator oder einem anderen elektrischen Verbraucher verbunden werden. Der entscheidende Vorteil ist, dass nun alle Akkumulatorstränge gleichzeitig mit der einzigen Schutzeinrichtung vom elektrischen Verbraucher getrennt und mit diesem verbunden werden können, so dass keine Ausgleichsströme zwischen den einzelnen Akkumulatorsträngen auftreten können. Folglich werden die elektrischen Verluste in einem Akkumulator, in dem die Akkumulatorstränge mit der erfindungsgemäßen Schaltung verbunden sind, reduziert. Darüberhinaus liegen die Pluspole oder Minuspole der einzelnen Akkumulatorstränge während ihrer parallelen Verbindung zueinander ein einheitliches elektrisches Potenzial auf, weshalb keine großen Ströme durch den Schalter zu erwarten sind. Dies erlaubt es, den Schalter in der erfindungsgemäßen Schaltung preisgünstig auszuwählen ohne das dieser gegen einen großen elektrische Leistungsfluss beständig sein muss.

Die Unteransprüche zeigen bevorzugte Weiterbildungen der Erfindung.

In einer alternativen Ausführung der Erfindung kann die Schaltung einen zweiten Schalter zum Trennen und Verbinden der verbleibenden gleichartigen Pole der Akkumulatorstränge aufweisen.

In einer Weiterbildung der Erfindung kann die Schaltung zum gleichzeitigen Schalten des ersten und zweiten Schalters vorgesehen sein.

In einer alternativen oder zusätzlichen Weiterbildung der Erfindung kann die Schaltung einen bidirektionalen Schaltwandler zum Ladungsausgleich zwischen den Pluspolen und Minuspolen des ersten und zweiten Akkumulatorstrangs aufweisen. Dieser Schaltwandler ermöglicht es die einzelnen Akkumulatorstränge im voneinander getrennten Zustand auf einem einheitlichen Spannungsniveau zu halten, so dass auch das Verbinden der einzelnen Akkumulatorstränge über die erfindungsgemäße Schaltung beinahe spannungslos erfolgen kann.

Der bidirektionale Schaltwandler kann in einer bevorzugten Ausführung ein bidirektionaler Sperrwandler sein.

Die Erfindung gibt auch einen Akkumulator zur Aufnahme und Abgabe elektrischer Energie über einen elektrischen Verbraucher mit einer Eingangskapazität an, wobei der Akkumulator einen ersten und zweiten Akkumulatorstrang aufweist. Jeder Akkumulatorstrang weist jeweils einen Pluspol und einen Minuspol zur Aufnahme und Abgabe der elektrischen Energie auf. Die beiden Akkumulatorstränge sind über eine erfindungsgemäße Schaltung parallel miteinander verbunden.

In einer Weiterbildung der Erfindung kann der Akkumulator eine Schutzschalteinrichtung zwischen den parallel geschalteten Akkumulatorsträngen und dem elektrischen Verbraucher zum Trennen der elektrischen Verbindung zum elektrischen Verbraucher aufweisen. Diese Schutzschalteinrichtung erlaubt es, den Akkumulator galvanisch vom Verbraucher zu trennen und Ruheströme zu reduzieren.

Die Schutzschalteinrichtung kann in einer besonderen Ausführung eine Vorladeeinrichtung zum Begrenzen des Ladestromes zum elektrischen Verbraucher aufweisen. Dadurch werden Kurzschlüsse und damit hohe Ströme über den elektrischen Verbraucher vermieden.

In einer Weiterbildung der Erfindung kann der Akkumulator beim Trennen der elektrischen Verbindung zum elektrischen Verbraucher zunächst zum Öffnen der Schutzschalteinrichtung und dann zum Öffnen wenigstens des ersten Schalters in der Schaltung vorgesehen sein. Auf diese Weise wird sichergestellt, dass die einzelnen Akkumulatorstränge beim Öffnen der Parallelschaltung auf einem gemeinsamen Spannungsniveau liegen, so dass das Öffnen der Parallelschaltung spannungslos erfolgen kann.

Die Erfindung gibt auch ein Fahrzeugbordnetz zur Versorgung von elektrischen Verbrauchern in einem Kraftfahrzeug mit elektrischer Energie aus einem erfindungsgemäßen Akkumulator an.

Die Erfindung gibt auch ein Verfahren zum Verbinden von wenigstens zwei Akkumulatorsträngen mit einem Zwischenkreiskondensator an. Dabei wird ein Zwischenkreiskondensator zunächst über den ersten Akkumulatorstrang und eine Ladeschaltung geladen. Danach wird der zweite Akkumulatorstrang (8) mit dem ersten Akkumulatorstrang (6) parallel verbunden.

In einer bevorzugten Ausführung kann die Ladeschaltung nach dem parallelen Verbinden der beiden Akkumulatorstränge überbrückt werden. Auf diese Weise kann die Ladeschaltung zum Verbinden für beide Akkumulatorstränge herangezogen werden.

Alternativ oder zusätzlich kann ein Spannungsniveau zwischen den Akkumulatorsträngen vor dem parallelen Verbinden ausgeglichen werden, wodurch die beiden Akkumulatorstränge leistungslos miteinander verbunden werden können.

### Zeichnungen

Nachfolgend werden nicht einschränkende Ausführungsbeispiele der Erfindung unter Bezugnahme auf die begleitenden Zeichnungen im Detail beschrieben. In den Zeichnungen zeigen:
- Figur 1: ein erfindungsgemäßes Akkumulatorsystem mit zwei Akkumulatorsträngen; und
- Figur 2: ein herkömmliches Akkumulatorsystem mit zwei Akkumulatorsträngen.

### Bevorzugte Ausführungsformen der Erfindung

Nachfolgend werden unter Bezugnahme auf die Figuren bevorzugte Ausführungsformen der Erfindung im Detail beschrieben.

In Figur 1 ist ein Prinzipschaltbild eines Akkumulators 2 mit einem Ausführungsbeispiel einer erfindungsgemäßen Schaltung 4 dargestellt.

Im Akkumulator 2 ist ein erster Akkumulatorstrang 6 über die erfindungsgemäße Schaltung 4 mit einem zweiten Akkumulatorstrang 8 parallel verbunden. An den ersten Akkumulatorstrang 6 ist ferner über eine Schutzschaltung 10 ein Zwischenkreiskondensator 12, als elektrischer Verbraucher mit einer Eingangskapazität parallel angeschlossen. Somit kann über den Zwischenkreiskondensator 12 ein elektrischer Strom 14 vom Akkumulator 2 aufgenommen und abgegeben werden.

Die erfindungsgemäße Schaltung 4 weist einen ersten Schalter 16 und einen zweiten Schalter 18 auf, um die Parallelverbindung zwischen den beiden Akkumulatorsträngen 6, 8 zu trennen und zu verbinden. Damit die beiden Akkumulatorsträngen 6, 8 im getrennten Zustand ein einheitliches Spannungsniveau aufweisen, ist in der erfindungsgemäßen Schaltung 4 ferner ein bidirektionaler Schaltwandler in Form eines bidirektionalen Sperrwandlers 20 vorhanden. Der Sperrwandler 20 weist einen Wandlertransformator 22 sowie zwei Transistoren 24,26 als Schalter auf. Zwischen Emitter und Kollektor der beiden Transistoren 24, 26 ist zum Schutz vor induktiven Lasten jeweils eine Freilaufdiode 28, 30 geschaltet. Der in Figur 1 gezeigte Sperrwandler 20 ist nur schemenhaft angedeutet. Es fehlen beispielsweise noch Komponenten zu Ansteuerung der beiden Transistoren 24, 26. Da der Aufbau eines bidirektionalen Sperrwandlers 20 jedoch bekannt ist, wird der Übersichtlichkeit halber darauf nicht näher eingegangen.

Die Schutzschaltung 10 weist einen ersten Leistungsschalter 32, einen zweiten Leistungsschalter 34, einen dritten Leistungsschalter 36 und einen Schutzwiderstand 38 auf. Über den ersten und zweiten Leistungsschalter 32, 34 können die parallel geschalteten Akkumulatorstränge 6, 8 mit dem Zwischenkreiskondensator 12 verbunden werden. Da der Zwischenkreiskondensator 12 im vollständig entladenen Zustand jedoch einen sehr kleinen Widerstand für den Akkumulator 2 darstellt, wird der Zwischenkreiskondensator 12 anfänglich nicht über den zweiten Leistungsschalter 34 sondern über den dritten Leistungsschalter 36 und den Schutzwiderstand 38 geladen, so dass der Strom 14 zum Zwischenkreiskondensator 12 begrenzt und die Akkumulatorstränge 6, 8 des Akkumulators 2 nicht unzulässig belastet werden.

Das Zuschalten der Akkumulatorstränge 6, 8 kann auf verschiedene Weise erfolgen. Beispielsweise können die beiden Akkumulatorstränge 6, 8 zunächst miteinander parallel verbunden werden. Die gesamte Parallelschaltung kann dann wie zuvor beschrieben, über die Schutzschaltung 10 an den Zwischenkreiskondensator 12 angeschlossen werden. Vorzugsweise wird jedoch zunächst der erste Akkumulatorstrang 6 über die Schutzschaltung 10 an den Zwischenkreiskondensator 12 angeschlossen. Ist der Zwischenkreiskondensator 12 dann vollständig aufgeladen, so wird der zweite Akkumulatorstrang 8 durch Schließen der Schalter 16, 18 an den ersten Akkumulatorstrang 6 angeschlossen.

Durch den bidirektionalen Sperrwandler 20 werden die beiden Akkumulatorstränge 6, 8 auf einem einheitlichen Spannungsniveau gehalten. Dadurch kann das Verbinden beider Akkumulatorstränge 6, 8 über die gemeinsame Schutzschaltung 10 mit dem Zwischenkreiskondensator 12 verbessert werden. Wird zunächst der erste Akkumulatorstrang 6 über die gemeinsame Schutzschaltung 10 mit dem Zwischenkreiskondensator 12 verbunden, hält der bidirektionale Sperrwandler 20 beide Akkumulatorstränge 6, 8 auch im getrennten Zustand auf einem einheitlichen Spannungsniveau, so dass beide Akkumulatorstränge nun spannungslos miteinander verbunden werden können und auf eine extra Schutzschaltung beim Zuschalten des zweiten Akkumulatorstrang 8 verzichtet werden kann.

Auf den Spannungswandler 20 könnte beim Zuschalten auch verzichtet werden. Beispielsweise könnte der dritte Leistungsschalter 36 solange geschlossen und der zweite Leistungsschalter 34 solange geöffnet bleiben, bis alle parallelen Akkumulatorstränge 6, 8 an den Zwischenkreiskondensator 12 angeschlossen sind.

Zum Trennen der beiden Akkumulatorstränge 6, 8 vom Zwischenkreiskondensator 12 wird zunächst der erste und zweite Leistungsschalter 32, 34 in der Schutzschaltung 10 geöffnet, bevor die beiden Schalter 16, 18 in der erfindungsgemäßen Schaltung 4 geöffnet werden. Durch das einheitliche Spannungsniveau beim Trennen und anschließenden Wiederverbinden treten so gut wie keine Verlustströme zwischen den beiden Akkumulatorsträngen 6, 8 auf.

Erfindungsgemäß wird das einheitliche Spannungsniveau zweier parallel miteinander verbundener Akkumulatorstränge genutzt, um einen Akkumulator mit wenig Verlusten von einem elektrischen Verbraucher mit einer Eingangskapazität als Last wie einem Zwischenkreiskondensator zu trennen. Das einheitliche Spannungsniveau erlaubt es auch, preisgünstige Schalter zum Trennen der Akkumulatorstränge untereinander zu verwenden, da die Schalter keinen hohen elektrischen Strömen ausgesetzt sind.

Neben der obigen Offenbarung wird hier ausdrücklich auf die Offenbarung der Figuren verwiesen.

## Patentansprüche

1. Schaltung (4) zum parallelen Verbinden eines ersten Akkumulatorstranges (6) mit einem zweiten Akkumulatorstrang (8) aus einem Akkumulator (2), der zur Aufnahme und Abgabe von elektrischer Energie (14) über die Akkumulatorstränge (6, 8) durch einen Zwischenkreiskondensator (12) als elektrischen Verbraucher (12) mit einer Eingangskapazität und einem im vollständig entladenen Zustand für den Akkumulator (2) sehr kleinen Widerstand vorgesehen ist, wobei jeder Akkumulatorstrang (6, 8) einen Pluspol und einen Minuspol zur Aufnahme und Abgabe der elektrischen Energie (14) aufweist, **dadurch gekennzeichnet, dass**
die Schaltung (4) wenigstens einen ersten Schalter (16) und einen zweiten Schalter (18) aufweist,
wobei der erste Schalter (16) zum Trennen und Verbinden zweier gleichartiger Pole der beiden Akkumulatorstränge (6, 8) vorgesehen ist, wobei der zweite Schalter (18) zum Trennen und Verbinden der verbleibenden gleichartigen Pole der Akkumulatorstränge (6, 8) vorgesehen ist,
wobei zwischen den parallel geschalteten Akkumulatorsträngen (6, 8) und dem Zwischenkreiskondensator (12) zum Trennen der elektrischen Verbindung zum Zwischenkreiskondensator (12) eine Schutzschalteinrichtung (10) mit einem ersten Leistungsschalter (32), einem zweiten Leistungsschalter (34), einem dritten Leistungsschalter (36) und einem Schutzwiderstand (38) angeordnet ist,
wobei der Akkumulator (2) beim Trennen der elektrischen Verbindung zum Zwischenkreiskondensator (12) zunächst zum Öffnen der Schutzschalteinrichtung (10) und dann zum Öffnen wenigstens des ersten Schalters (16) in der Schaltung (4) vorgesehen ist, wodurch die Akkumulatorstränge (6, 8) beim Öffnen der Parallelschaltung auf einem gemeinsamen Spannungsniveau liegen.

2. Schaltung (4) nach Anspruch 1, wobei die Schaltung (4) zum gleichzeitigen Schalten des ersten und zweiten Schalters (16, 18) vorgesehen ist.

3. Schaltung (4) nach einem der vorstehenden Ansprüche mit einem bidirektionalen Schaltwandler (20) zum Ladungsausgleich zwischen den Pluspolen und Minuspolen des ersten und zweiten Akkumulatorstrangs (6, 8).

4. Schaltung (4) nach Anspruch 3, wobei der bidirektionale Schaltwandler (20) ein bidirektionaler Sperrwandler ist.

5. Akkumulator (2) zur Aufnahme und Abgabe elektrischer Energie (14) über einen Zwischenkreiskondensator (12) als elektrischen Verbraucher (12) mit einer Eingangskapazität und einem im vollständig entladenen Zustand für den Akkumulator (2) sehr kleinen Widerstand, wobei der Akkumulator (2) einen ersten und zweiten Akkumulatorstrang (6, 8) mit jeweils einem Pluspol und einem Minuspol zur Aufnahme und Abgabe der elektrischen Energie (14) aufweist, und wobei die beiden Akkumulatorstränge (6, 8) über eine Schaltung (4) nach einem der Ansprüche 1 bis 4 parallel miteinander verbunden sind.

6. Akkumulator (2) nach Anspruch 5, wobei die Schutzschalteinrichtung (10) eine Vorladeeinrichtung (36, 38) zum Begrenzen des Ladestromes (14) zum Zwischenkreiskondensator (12) aufweist.

7. Fahrzeugbordnetz zur Versorgung von elektrischen Verbrauchern in einem Kraftfahrzeug mit elektrischer Energie (14) aus einem Akkumulator (2) nach einem der Ansprüche 5 bis 6.

8. Verfahren zum Trennen und Verbinden eines ersten und eines zweiten Akkumulatorstranges (6,8) mittels einer Schaltung (4) zum parallelen Verbinden eines ersten Akkumulatorstranges (6) mit einem zweiten Akkumulatorstrang (8) eines Akkumulators (2) mit einem Zwischenkreiskondensator (12) als elektrischem Verbraucher mit einer Eingangskapazität und einem im vollständig entladenen Zustand für den Akkumulator (2) sehr kleinen Widerstand nach einem der Ansprüche 1 bis 4,
wobei der Akkumulator (2) zur Aufnahme und Abgabe der durch den Zwischenkreiskondensator (12) durchfließenden Energie (14) über die beiden Akkumulatorstränge (6, 8) vorgesehen ist,
wobei die beiden Akkumulatorstränge (6,8) in der Schaltung (4) jeweils einen Pluspol und einen Minuspol zur Aufnahme und Abgabe der elektrischen Energie (14) aufweisen,
wobei die Schaltung (4) wenigstens einen ersten Schalter (16) und einen zweiten Schalter (18) aufweist,
wobei der erste Schalter (16) zum Trennen und Verbinden zweier gleichartiger Pole der beiden Akkumulatorstränge (6, 8) vorgesehen ist, wobei der zweite Schalter (18) zum Trennen und Verbinden der verbleibenden gleichartigen Pole der Akkumulatorstränge (6, 8) vorgesehen ist,
wobei zum Trennen der elektrischen Verbindung zum Zwischenkreiskondensator (12) zunächst eine zwischen den parallel geschalteten Akkumulatorsträngen (6, 8) und dem Zwischenkreiskondensator (12) liegende Schutzschalteinrichtung (10) mit einem ersten Leistungsschalter (32), einem zweiten Leistungsschalter (34), einem dritten Leistungsschalter (36) und einem Schutzwiderstand (38) geöffnet wird und dann wenigstens der erste Schalter (16) in der Schaltung (4) geöffnet wird,
wobei das Verfahren die Schritte aufweist:
- Laden des Zwischenkreiskondensators (12) über den ersten Akkumulatorstrang (6) und die Ladeschaltung (36, 38); und
- paralleles Verbinden des zweiten Akkumulatorstranges (8) mit dem ersten Akkumulatorstrang (6).

9. Verfahren nach Anspruch 8, mit dem Schritt:
- Überbrücken der Ladeschaltung (36, 38) nach dem parallelen Verbinden der beiden Akkumulatorstränge (6, 8)

10. Verfahren nach Anspruch 8 oder 9, mit dem Schritt:
- Ausgleichen eines Spannungsniveaus zwischen den Akkumulatorsträngen (6, 8) vor dem parallelen Verbinden.

## Claims

1. Circuit (4) for the parallel connection of a first battery string (6) to a second battery string (8) consisting of a battery (2) that is designed to receive and output electrical energy (14) via the battery strings (6, 8) through an intermediate circuit capacitor (12) as electrical consumer (12) having an input capacitance and a resistance that is very small for the battery (2) in the completely discharged state, wherein each battery string (6, 8) has a positive pole and a negative pole for receiving and outputting the electrical energy (14),
**characterized in that**
the circuit (4) has at least a first switch (16) and a second switch (18),
wherein the first switch (16) is designed to connect and disconnect two like poles of the two battery strings (6, 8),
wherein the second switch (18) is designed to connect and disconnect the remaining like poles of the battery strings (6, 8),
wherein, in order to disconnect the electrical connection to the intermediate circuit capacitor (12), a protective switching device (10) having a first power switch (32), a second power switch (34), a third power switch (36) and a protective resistor (38) is arranged between the parallel-connected battery strings (6, 8) and the intermediate circuit capacitor (12),
wherein the battery (2), upon disconnection of the electrical connection to the intermediate circuit capacitor (12), is initially designed to open the protective switching device (10) and then to open at least the first switch (16) in the circuit (4), as a result of which the battery strings (6, 8) are at a common voltage level when the parallel circuit is opened.

2. Circuit (4) according to Claim 1, wherein the circuit (4) is designed to simultaneously switch the first and second switch (16, 18).

3. Circuit (4) according to either of the preceding claims, having a bidirectional switching converter (20) for load balancing between the positive poles and negative poles of the first and second battery string (6, 8) .

4. Circuit (4) according to Claim 3, wherein the bidirectional switching converter (20) is a bidirectional flyback converter.

5. Battery (2) for receiving and outputting electrical energy (14) via an intermediate circuit capacitor (12) as electrical consumer (12) having an input capacitance and a resistance that is very small for the battery (2) in the completely discharged state, wherein the battery (2) has a first and second battery string (6, 8) each having a positive pole and a negative pole for receiving and outputting the electrical energy (14), and wherein the two battery strings (6, 8) are connected to one another in parallel via a circuit (4) according to one of Claims 1 to 4.

6. Battery (2) according to Claim 5, wherein the protective switching device (10) has a pre-charging device (36, 38) for limiting the charge current (14) to the intermediate circuit capacitor (12).

7. On-board vehicle power system for supplying electrical consumers in a motor vehicle with electrical energy (14) from a battery (2) according to either of Claims 5 and 6.

8. Method for disconnecting and connecting a first and a second battery string (6, 8) by way of a circuit (4) for the parallel connection of a first battery string (6) to a second battery string (8) of a battery (2) with an intermediate circuit capacitor (12) as electrical consumer having an input capacitance and a resistance that is very small for the battery (2) in the completely discharged state, according to one of Claims 1 to 4,
wherein the battery (2) is designed to receive and output the energy (14) flowing through the intermediate circuit capacitor (12) via the two battery strings (6, 8),
wherein the two battery strings (6, 8) in the circuit (4) each have a positive pole and a negative pole for receiving and outputting the electrical energy (14),
wherein the circuit (4) has at least a first switch (16) and a second switch (18),
wherein the first switch (16) is designed to connect and disconnect two like poles of the two battery strings (6, 8),
wherein the second switch (18) is designed to connect and disconnect the remaining like poles of the battery strings (6, 8),
wherein, in order to disconnect the electrical connection to the intermediate circuit capacitor (12), a protective circuit device (10) having a first power switch (32), a second power switch (34), a third power switch (36) and a protective resistor (38) and that is situated between the parallel-connected battery strings (6, 8) and the intermediate circuit capacitor (12) is initially opened and then at least the first switch (16) in the circuit (4) is opened,
wherein the method comprises the steps of:
- charging the intermediate circuit capacitor (12) via the first battery string (6) and the charging circuit (36, 38); and
- connecting the second battery string (8) in parallel with the first battery string (6).

9. Method according to Claim 8, having the step:
- bridging the charging circuit (36, 38) after the two battery strings (6, 8) have been connected in parallel.

10. Method according to Claim 8 or 9, having the step:
- balancing a voltage level between the two battery strings (6, 8) before the parallel connection.

## Revendications

1. Circuit (4) destiné à relier en parallèle une première branche d'accumulateur (6) avec une deuxième branche d'accumulateur (8) d'un accumulateur (2), lequel est conçu pour recevoir et délivrer de l'énergie électrique (14) par le biais des branches d'accumulateur (6, 8) à travers un condensateur de circuit intermédiaire (12) en tant que récepteur électrique (12), comprenant une capacité d'entrée et une résistance très faible pour l'accumulateur (2) à l'état complètement déchargé, chaque branche d'accumulateur (6, 8) possédant une borne positive et une borne négative servant à recevoir et à délivrer l'énergie électrique (14), **caractérisé en ce que** le circuit (4) possède au moins un premier commutateur (16) et un deuxième commutateur (18),
le premier commutateur (16) étant conçu pour déconnecter et relier deux bornes du même type des deux branches d'accumulateur (6, 8),
le deuxième commutateur (18) étant conçu pour déconnecter et relier les bornes du même type restantes des branches d'accumulateur (6, 8),
un dispositif de commutation de protection (10), comprenant un premier commutateur de puissance (32), un deuxième commutateur de puissance (34), un troisième commutateur de puissance (36) et une résistance de protection (38), étant disposé entre les branches d'accumulateur (6, 8) branchées en parallèle et le condensateur de circuit intermédiaire (12) pour déconnecter la liaison électrique vers le condensateur de circuit intermédiaire (12),
l'accumulateur (2), lors de la déconnexion de la liaison électrique vers le condensateur de circuit intermédiaire (12), étant conçu pour ouvrir tout d'abord le dispositif de commutation de protection (10) et ensuite pour ouvrir au moins le premier commutateur (16) dans le circuit (4), moyennant quoi les branches d'accumulateur (6, 8) se trouvent à un niveau de tension commun lors de l'ouverture du circuit parallèle.

2. Circuit (4) selon la revendication 1, le circuit (4) étant conçu pour la commutation simultanée du premier et du deuxième commutateur (16, 18).

3. Circuit (4) selon l'une des revendications précédentes, comprenant un convertisseur à découpage (20) bidirectionnel servant à l'équilibrage de la charge entre les bornes positives et les bornes négatives de la première et de la deuxième branche d'accumulateur (6, 8).

4. Circuit (4) selon la revendication 3, le convertisseur à découpage (20) bidirectionnel étant un convertisseur à oscillateur bloqué bidirectionnel.

5. Accumulateur (2) destiné à recevoir et délivrer de l'énergie électrique (14) par le biais d'un condensateur de circuit intermédiaire (12) en tant que récepteur électrique (12), comprenant une capacité d'entrée et une résistance très faible pour l'accumulateur (2) à l'état complètement déchargé, l'accumulateur (2) possédant une première et une deuxième branche d'accumulateur (6, 8) comprenant respectivement une borne positive et une borne négative servant à recevoir et à délivrer l'énergie électrique (14), et les deux branches d'accumulateur (6, 8) étant reliées en parallèle l'une à l'autre par le biais d'un circuit (4) selon l'une des revendications 1 à 4.

6. Accumulateur (2) selon la revendication 5, le dispositif de commutation de protection (10) possédant un dispositif de précharge (36, 38) destiné à limiter le courant de charge (14) vers le condensateur de circuit intermédiaire (12).

7. Réseau de bord de véhicule destiné à l'alimentation en énergie électrique de récepteurs électriques dans un véhicule automobile (14) à partir d'un accumulateur (2) selon l'une des revendications 5 à 6.

8. Procédé pour déconnecter et relier une première et une deuxième branche d'accumulateur (6, 8) au moyen d'un circuit (4) destiné à relier en parallèle une première branche d'accumulateur (6) avec une deuxième branche d'accumulateur (8) d'un accumulateur (2) comprenant un condensateur de circuit intermédiaire (12) en tant que récepteur électrique ayant une capacité d'entrée et une résistance très faible pour l'accumulateur (2) à l'état complètement déchargé selon l'une des revendications 1 à 4,
l'accumulateur (2) étant conçu pour recevoir et délivrer l'énergie électrique (14) qui s'écoule à travers le condensateur de circuit intermédiaire (12) par le biais des deux branches d'accumulateur (6, 8),
les deux branches d'accumulateur (6, 8) dans le circuit (4) possédant respectivement une borne positive et une borne négative servant à recevoir et à délivrer l'énergie électrique (14),
le circuit (4) possédant au moins un premier commutateur (16) et un deuxième commutateur (18),
le premier commutateur (16) étant conçu pour déconnecter et relier deux bornes du même type des deux branches d'accumulateur (6, 8),
le deuxième commutateur (18) étant conçu pour déconnecter et relier les bornes du même type restantes des branches d'accumulateur (6, 8),
pour la déconnexion de la liaison électrique au condensateur de circuit intermédiaire (12), un dispositif de commutation de protection (10) qui est disposé entre les branches d'accumulateur (6, 8) branchées en parallèle et le condensateur de circuit intermédiaire (12), comprenant un premier commutateur de puissance (32), un deuxième commutateur de puissance (34), un troisième commutateur de puissance (36) et une résistance de protection (38), étant tout d'abord ouvert et ensuite au moins le premier commutateur (16) dans le circuit (4) est ouvert,
le procédé comprenant les étapes suivantes :
- charge du condensateur de circuit intermédiaire (12) par le biais de la première branche d'accumulateur (6) et le circuit de charge (36, 38) ; et
- liaison en parallèle de la deuxième branche d'accumulateur (8) avec la première branche d'accumulateur (6).

9. Procédé selon la revendication 8, comprenant l'étape :
- court-circuitage du circuit de charge (36, 38) après la liaison en parallèle des deux branches d'accumulateur (6, 8).

10. Procédé selon la revendication 8 ou 9, comprenant l'étape :
- équilibrage d'un niveau de tension entre les branches d'accumulateur (6, 8) avant la liaison en parallèle.
